(19) Europäisches Patentamt
European Patent Office
Office européen des brevets

(11) **EP 2 317 237 A1**

(12) **EUROPÄISCHE PATENTANMELDUNG**

(43) Veröffentlichungstag:
04.05.2011 Patentblatt 2011/18

(51) Int Cl.:
*F24F 12/00* (2006.01)   *F24F 11/00* (2006.01)

(21) Anmeldenummer: 09013777.9

(22) Anmeldetag: 03.11.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA RS

(71) Anmelder: Blieske, Erhard
93077 Bad Abbach (DE)

(72) Erfinder: Blieske, Erhard
93077 Bad Abbach (DE)

(54) **Aussenwand-Quell-Lüftungsgerät**

(57)   Nachhaltig, wirtschaftliches Lüftungs- System zum individuellen Lüften von Aufenthalts- Räumen. Es werden ca. 20% der Heizenergiekosten eingespart, was die begrenzten Energie- Ressourcen schont.

Die Luftschadstoffe im Aufenthalts- Raum werden wirkungsvoll abgeführt, gleichzeitig wird notwendiger Sauerstoff zugeführt. Bei offenen Innenraum-Türen werden auch die angrenzenden Räume mit belüftet (1- bis 3- Zimmer-Wohnung).

Geräteinnenansicht und Querschnitt der Montageansicht im Maßstab 1:10 mit

in ungefährer Größe und Position dargestellten Einbauten.

Fig. 1
Geräteinnenansicht

Fig. 2
Montageansicht

EP 2 317 237 A1

**Beschreibung**

Erfindungsgebiet

Die Erfindung bezieht sich auf ein nachhaltiges, sich selbst amortisierendes Lüftungsgerät welches die begrenzten Energieressourcen schont, die im Aufenthaltsraum anfallenden Luftschadstoffe wirkungsvoll abführt und frischen Sauerstoff zuführt.

Das Gerät ist optisch ansprechend, individuell gestaltbar und einfach zu bedienen.

Hintergrund der Erfindung

Ich war Kettenraucher und im Winter lüftungsfaul, weil es zieht. Heizen kostet Geld und belastet die Umwelt.

Wohnungslüftungs- Systeme sind vorwiegend im Einfamilienhaus- Neubau bekannt. Nullenergie- und sogar Positivenergie- Häuser werden gebaut.

Der Anmelder der vorliegenden Patentbeschreibung hat das Lüftungsgerät Entworfen, optimiert und hergestellt.

Zusammenfassung der Erfindung

Die Erfindung wird im Hauptanspruch definiert und charakterisiert, während die abhängigen Ansprüche weitere Merkmale beschreiben.

Der Zweck ist es eine einfach zu bedienende Vorrichtung zu schaffen, die durch Die Mehrfachnutzung der Eigenschaften der verwendeten Materialien günstig In der Herstellung wird und es somit jedem Bewohner es ermöglicht ein Gerät anzuschaffen.

Kurze Beschreibung der Zeichnung

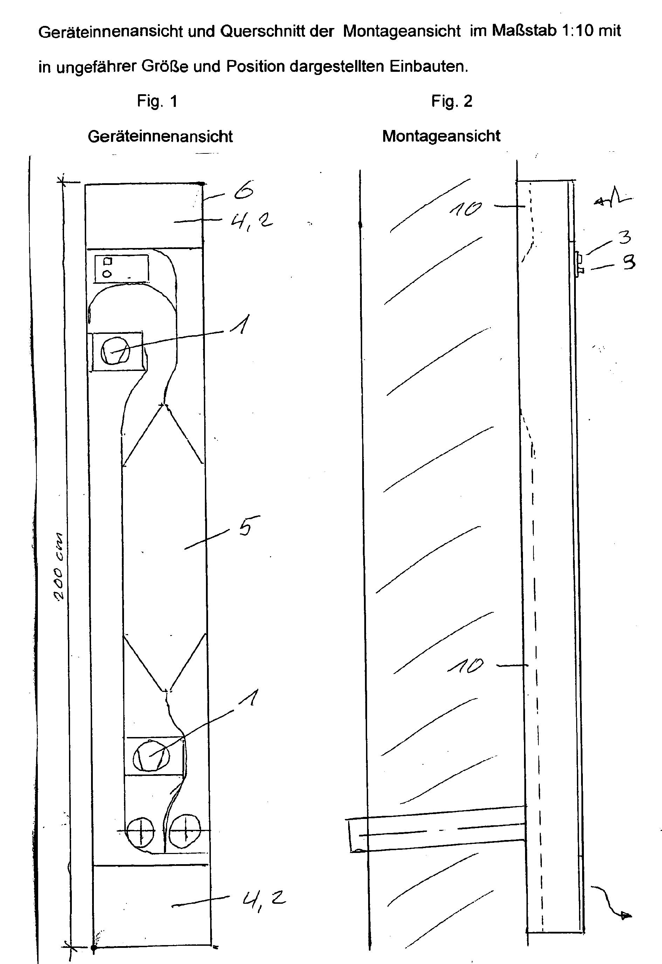

Fig. 1: schematische Geräteinnenansicht
Fig. 2: Gerätemontageansicht

Detaillierte Beschreibung einer bevorzugten Ausführungsform

Das Lüftungsgerät erfordert nur eine kleine freie Außenwand, bis in Kniehöhe und eine gegenüberliegende vertikale freie Innenwand in Raumhöhe, sowie eine Steckdose. Durch die Abmessung und Montage bedingt, bewirkt das Gerät ein Optimales Quell- Lüftungssystem 4 im Raum. Das kann man sich vorstellen wie eine überlaufende Badewanne. Die leicht kühlere Zuluft verteilt sich in der ganzen Wohnung. Die Luftmenge wird am 5- Stufen- Transformator 9 vorgewählt: von 33 bis 111 m3/h. Der Transformator erzeugt keine störenden Summ- und Brummgeräusche in den Ventilatoren. Der Schalter 3: 0 - I, dient zum Ein- und Ausschalten des Gerätes. Über eine handelsübliche dazwischen geschaltete Zeitschaltuhr wird das Gerät nach Wunsch Ein- und AUS- geschaltet. Die WärmeRückgewinnung 5 darf keinen zu großen Wirkungsgrad aufweisen, weil dann der Quell- Lüftungseffekt 4zunichte gemacht wird, welcher immerhin einen doppelt so guten Lüftungs- Effekt erzielt wie ein Mischlüftungs- System. Das Misch-Lüftungssystem kann aber auch zum Heizen angewendet werden.

Das verwendete Gehäuse- Material 6 weist die folgenden kombinierten Materialeigenschaften auf:

Wärmeisolation
Schalldurchtritts- Isolation
Elektro- Isolation, Schutzklasse B
Korrosionsbeständig
Einschichtig und benötigt keine Oberflächenveredelung

Die Wärmerückgewinnung 5 weist keine Luft- Bypass- Leitung auf. Er wurde so konstruiert, dass kein Zufrieren zu erwarten ist. Sollte dies wider Erwarten trotzdem geschehen gibt es drei Möglichkeiten das Eis wieder abzutauen.

Schadstoffbelastung im Wohnbereich

Aus einem Bericht der Europäischen Umweltagentur EEA in Kopenhagen, veröffentlicht am 21.8.2009, gehen folgende Tatsachen hervor:

Private Haushalte sind für die Raumluftbelastung die größten Quellen in Bezug Auf Feinstaub (PM 2,5) und flüchtige organische Verbindungen (NMVOC).

Beim Kohlendioxyd (CO2) ist der private Haushalt die zweitgrößte

Emissions- Quelle.

Abdeckungs- Bereich der Luftmenge und Bedienung

Die Luftmenge reicht auf der Stufe 2 für eine Person, die nicht raucht, über zwei Kettenraucher, bis 4 Personen, welche nicht rauchen auf der Stufe 5.
Die benötigte Luftmenge ist von der jeweiligen Aktivität abhängig, diese reicht von schlafen über Hausarbeit bis zu körperlichen Ertüchtigung mit einem Home-Trainer. Rauchen oder nicht rauchen, kochen, Bad benützen.
Die Betriebsanzeigelampe 3 (Grün) zeigt an ob das Gerät läuft. Die elektrische Leistungsaufnahme auf der Stufe 3 beträgt: 28W, dies entspricht dem Energiebedarf von zwei Energie- Sparlampen.

**BERECHNUNGEN**

Wärmetauscherleistung

Wärmeübertragung

Nach dem Fachhandbuch Recknagel- Sprenger, Ausgabe 79/80, Seite 114/ 214. Wärmeübergangszahl Alpha, freie Luftströmung längs einer Platte, für Luftgeschwindigkeiten < 5m/s (nach Jürgens).

Im Wärmetauscher wirkt eine aufgezwungene Strömung, welche messbar beßere

Werte erzeugt. Eine diesbezügliche Formel habe ich nicht gefunden. Für die Wärmedurchgangszahl u, fand ich keine entsprechende Formel, Quelle: Recknagel- Sprenger und Dubbel Taschenbuch, 13. Auflage, Band 1, Seite 470.

Druckverlust

Der Luftwiderstandsbeiwert Lamda ergab folgende Schwierigkeiten:

Die Reynold- Zahl liegt im Übergangsbereich laminar, turbulent.
Die Ablesungs- Größe: Lamda- Wert liegt folglich auch außerhalb des Diagramms.

Strömungsberechnung im Lüftungsgerät

Aus Recknagel- Sprenger, Seite 961/ 962:

Die Zeta- Werte liefern nur halbherzige Werte für die Auslegung, weil die verwendete Konstruktion oft von den Vorgaben abweicht.

Schallberechnung

Nach der Fachliteratur: Akustik für den Heizungs- Lüftungs- und Klimaingenieur, Autor Walter Lips, Ausgabe 1981 für deie Fachabteilung HLK am zentralschweizerischen Technikum, Luzern.
Die Schalldämmung 7 dient vorgänglich der Verminderung des Wärmedurchganges, erzeugt durch die zwei Luftöffnungen durch die Außenwand. Die Schallerzeugung durch die zwei Ventilatoren 1 und Luftströmungsrauschen im Gerät sind vernachlässigbar.
Die Schallberechnung konnte angemessen berechnet werden. Es wird aber immer eine leicht Strömungstechnisch abgewandelte Formgebung verwendet.
Die guten Messwerte mussten durch aufwendige empirische Versuche optimiert und gefunden werden.

**VERGLEICH UND BEWERTUNG DES JAHRES- ENERGIEBEDARFES**

Aus dem Magazin: Fachplaner, E5444, 8.Jahrgang, Ausgabe Juni 2009, Center Verlag, Ausgabe 6, Autor: Ing.

Christoph Kaup, Howatherm Klimatechnik GmbH.

Die neue WRG- Bewertung nach EN 13053, besteht auf den Leistungsdaten der EN 308 /thermische Leistung und Druckverlust bei: t AUL= 5°C und t FOL= +25 °C Die den Hilfsenergieaufwand in die Bewertung einfließen lässt (VDI 3803 (2)).

Der Temperaturänderungsgrad oder die Rückwärmezahl Phi sind:

Phi= Nutzen der WRG/ Potential der WRG= Q-WRG/ Q-P (kW):

$$\text{Phi}= 0{,}594/0{,}792= 0{,}75 = 75\%.$$

Die Hilfsenergie Q- Hel wird berechnet aus:

Q- Hel= V * dP * 1/ Wirkungsgrad Ventilator + P aux
Q- Hel= 0,0222m3/s * 120 Pa/ 0,6= 4,44W

Der Wirkungsgrad der Ventilatoren wurde auf 60% festgelegt, Paux wird von mir in die Berechnung vernachlässigt (keine Wasserumwälzung).

COP= Q-WRG/ P-el= Phi, dieser ist gut im Bereich: 10< gut < 30.

COP= 0,594/ 0,028= 21= Epsilon.

Die Jahres- Energiebetrachtung

Die Jahresarbeitszahl Epsilon-a= (W-WRG- W-el)/ W WRG= (782kWh- 74kWh)/ 782= 90% 80 m3/h * 1 kj/kg/K * 1,15kg/m3 * 31 K *0,75/ 3600s/h-0,028W * 220 Hd/a * 12h/d /0,594= 87%.

Aus der Tabelle im genannten Bericht, Jahres- Energiewirkungsgrad e 1:1, nach EN 13053 und ihrer Basiswerte für die Klassen:

| Klasse | Epsilon-a | Phi | dP HRS (Pa) | Epsilon | Epsilon-el |
|--------|-----------|-----|-------------|---------|------------|
| H1 | 71 | 75 | 2x 280 | 19,5 | 71 |
| H2 | 64 | 67 | 2x 230 | 21,2 | 64 |
| H3 | 55 | 57 | 2x 170 | 24,2 | 55 |
| H4 | 45 | 47 | 2x 125 | 27,3 | 45 |
| H5 | 36 | 37 | 2x 100 | 26,9 | 36 |
| H6 | keine Anforderungen | | | | |

Meine gemessenen Werte:

| Klasse | Epsilon-a | Phi | dP HRS (Pa) | Epsilon | Epsilon-el |
|--------|-----------|-----|-------------|---------|------------|
| Stufe 3 | 90 | 75 | 2x 60 | 21 | 16 |

**Patentansprüche**

**1.** Das Gerät dient dem wirkungsvollen und wirtschaftlichen Lüften von Aufenthaltsräumen, und weist folgende Merkmale auf:
Luftmenge: 33 bis 111 m3/h. +-10%.

**2.** Das Gerät nach Anspruch 1, **dadurch gekennzeichnet, dass** die Antriebsmittel 1, mindestens zwei Ventilatoren aufweist.

**3.** Das Gerät nach Anspruch 1, **dadurch gekennzeichnet, dass** ein optimaler Lüftungs- Effekt 4 (Quell- Lüftung) gewährleistet ist.

**4.** Das Gerät nach Anspruch 1, **dadurch gekennzeichnet, dass** es nach der Norm EN 13053 eine optimal große Jahresenergie-Rückgewinnung aufweist.

**5.** Das Gerät nach Anspruch 1, **dadurch gekennzeichnet, dass** es eine minimales Betriebsgeräusch im Aufenthaltsbereich und ein maximaler Schallschutz 7 durch die Außenwand gewährleistet ist.

**6.** Das Gerät nach Anspruch 1, **dadurch gekennzeichnet, dass** ein einfaches Auswechseln der Filtereinsätze 2, 4 ohne Werkzeuge möglich ist.

**7.** Das Gerät nach Anspruch 1, **dadurch gekennzeichnet, dass** durch ein paar einfache Handgriffe das Gerät auf freie Kühlung im Sommer umstellbar ist.

Der Weg zum europäischen Patent, Abs. 37: Die Schwierigkeit besteht darin, das Lüftungsgerät 1 rechnerisch auszulegen, weil die zur Verfügung stehende Fachliteratur keine anwendbaren Angaben enthält.

Das Beweiszeichen ist das gemessene Resultat des Lüftungsgerätes.

.Der Weg zum europäischen Patent, Abs. 36:

Die erfinderische Tätigkeit beruht darauf, dass sie für den Fachmann in nicht Naheliegender Weise aus dem Stand der Technik oder der Fachliteratur Nachvollziehbar ist.

Geräteinnenansicht und Querschnitt der Montageansicht im Maßstab 1:10 mit

in ungefährer Größe und Position dargestellten Einbauten.

Fig. 1                                        Fig. 2

Geräteinnenansicht                    Montageansicht

Europäisches
Patentamt

European
Patent Office

Office européen
des brevets

**EUROPÄISCHER RECHERCHENBERICHT**

Nummer der Anmeldung

EP 09 01 3777

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/091632 A1 (OXYCELL HOLDING BV [NL]; REINDERS JOHANNES ANTONIUS MAR [NL]; BERBEN E) 6. November 2003 (2003-11-06) * Seite 5, Zeile 4 - Zeile 21; Abbildungen 1-3 * ----- | 1-7 | INV. F24F12/00 F24F11/00 |
| X | EP 1 772 679 A1 (LTG AG [DE]) 11. April 2007 (2007-04-11) * Absatz [0034] - Absatz [0042]; Abbildungen 1-5 * ----- | 1-7 | |
| X | WO 99/43992 A1 (SPOEHRLE GEORGES [CH]) 2. September 1999 (1999-09-02) * das ganze Dokument * ----- | 1-7 | |
| X | DE 199 08 065 A1 (SKS STAKUSIT BAUTECHNIK GMBH [DE]) 7. September 2000 (2000-09-07) * das ganze Dokument * ----- | 1-7 | |
| X | DE 29 29 875 A1 (KLOOS HORST RUEDIGER) 19. Februar 1981 (1981-02-19) * Zusammenfassung; Abbildung 1 * ----- | 1-7 | RECHERCHIERTE SACHGEBIETE (IPC) F24F |
| X | FR 2 831 245 A1 (THIESSARD JEAN [FR]) 25. April 2003 (2003-04-25) * das ganze Dokument * ----- | 1-7 | |

Der vorliegende Recherchenbericht wurde für alle Patentansprüche erstellt

| Recherchenort | Abschlußdatum der Recherche | Prüfer |
|---|---|---|
| München | 15. April 2010 | Valenza, Davide |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 3777

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2010

| Im Recherchenbericht angeführtes Patentdokument | Datum der Veröffentlichung | Mitglied(er) der Patentfamilie | Datum der Veröffentlichung |
|---|---|---|---|
| WO 03091632 A1 | 06-11-2003 | AT 403839 T<br>AU 2003215965 A1<br>BR 0309555 A<br>EP 1552223 A1<br>NL 1020481 C1<br>US 2006086058 A1 | 15-08-2008<br>10-11-2003<br>19-04-2005<br>13-07-2005<br>31-10-2003<br>27-04-2006 |
| EP 1772679 A1 | 11-04-2007 | DE 102005045871 A1 | 29-03-2007 |
| WO 9943992 A1 | 02-09-1999 | AU 2437299 A | 15-09-1999 |
| DE 19908065 A1 | 07-09-2000 | KEINE | |
| DE 2929875 A1 | 19-02-1981 | KEINE | |
| FR 2831245 A1 | 25-04-2003 | KEINE | |

EPO FORM P0461

Für nähere Einzelheiten zu diesem Anhang : siehe Amtsblatt des Europäischen Patentamts, Nr.12/82

**EP 2 317 237 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Fachhandbuch Recknagel- Sprenger. 114, 214
- Quelle: Recknagel- Sprenger und Dubbel Taschenbuch. vol. 1, 470
- **Walter Lips.** Akustik für den Heizungs- Lüftungs- und Klimaingenieur. 1981
- Fachplaner, E5444, 8.Jahrgang. Center Verlag, Juni 2009